# EUROPEAN PATENT SPECIFICATION

(11) **EP 3 610 558 B1**
(45) Date of publication and mention of the grant of the patent: **17.02.2021**
(21) Application number: 17718052.8
(22) Date of filing: 13.04.2017
(51) Int. Cl.: H02K 1/27, H02K 29/03

(54) **SHEET AND ROTOR OF ELECTRIC MACHINE AND METHOD OF MANUFACTURING THEM**
FOLIE UND ROTOR EINER ELEKTRISCHEN MASCHINE UND VERFAHREN ZUR HERSTELLUNG DAVON
FEUILLE ET ROTOR DE MACHINE ÉLECTRIQUE ET LEUR PROCÉDÉ DE FABRICATION

(43) Date of publication of application: 19.02.2020
(73) Proprietor: ABB Schweiz AG, 5400 Baden (CH)
(72) Inventor: KOLEHMAINEN, Jere, 65320 Vaasa (FI)
(74) Representative: Kolster Oy Ab
(86) International application number: PCT/EP2017/058962
(87) International publication number: WO 2018/188755

(56) References cited:
- WO-A1-2017/021078
- US-A1- 2008 224 558
- US-A1- 2010 026 128
- US-A1- 2010 156 234
- US-A1- 2013 069 470

## Description

### Field

The invention relates to a sheet and a rotor of an electric machine, and their manufacturing method.

### Background

The rotor of an electric machine and especially for the permanent magnet and permanent magnet assisted synchronous reluctance machines there is a problem related to torque ripple, noise etc. Skewing of a rotor or a stator is the usual way to handle it especially for induction motors. In permanent magnet machines, the rotor skewing makes installation of magnets difficult or impossible. In larger large machines, skewing the stator has been used to overcome the problem, but for small motors stator skewing still is difficult and/or too expensive. Hence, there is need for improvement in control of the problems.

### Brief description

The present invention seeks to provide an improvement in distributing outer flux barriers of the rotor of an electric machine. According to an aspect of the present invention, there is provided a sheet of a rotor of an electric machine as specified in claim 1.

According to another aspect of the present invention, there is provided a rotor of an electric machine in claim 8.

According to another aspect of the present invention, there is provided a method of manufacturing sheets of a rotor of an electric machine in claim 12.

The invention has advantages. All sheets of the stack or rotor are made similar or identical. The rotation of the sheets about one or more axes allows a desired distribution of the outer flux barriers which may be used to distribute the outer flux barriers in a desired manner and skew the rotor.

### List of drawings

Example embodiments of the present invention are described below, by way of example only, with reference to the accompanying drawings, in which
Figures 1 to 4 illustrate examples of sheets of a rotor of an electric machine;
Figures 5 to 9 illustrate examples of sheets of a rotor overlaid on each other;
Figure 10 illustrates an example of a rotor;
Figures 11 to 13 illustrate examples of different magnetization directions in the rotor;
Figure 14 illustrates of an example of a flow chart of a manufacturing method of sheets of the rotor; and
Figure 15 illustrates of an example of a flow chart of a manufacturing method of the rotor.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments, they are simplified diagrams that only show some structures and/or functional entities. It is apparent to a person skilled in the art that the described apparatus may also comprise other functions and structures than those described in Figures and text. It should be appreciated that details of some functions, structures are irrelevant to the actual invention. Therefore, they need not be discussed in more detail here.

The electric machine is a device which converts electrical energy into mechanical energy or vice versa. The electric motor may be a synchronous reluctance motor, for example but not restricted thereto. The axis of the electric motor rotates and its rotation is based on magnetic torque. The synchronous reluctance motor induces non-permanent magnetic poles on the rotor which is a made of sheets of ferromagnetic material. The ferromagnetic material may comprise iron, laminated silicon steel or it may be made of powder metal, for example.

In prior art, a rotor has a transversally laminated structure which has similar sheets pressed together in the same position throughout the rotor.

The rotor in this application comprises a stack of successive sheets which may be spatially shifted with respect to each other. It may also be considered that the stack of a plurality of sheets resembles a stack of transverse rotor elements. The stack of sheets is not purely salient or axially laminated but still has some features resembling them. Each of the plurality of sheets may be planar and round. In an embodiment, the sheets may have a constant thickness. In an embodiment, a normal of the planar surfaces of the sheets is parallel to the rotational axis of the rotor.

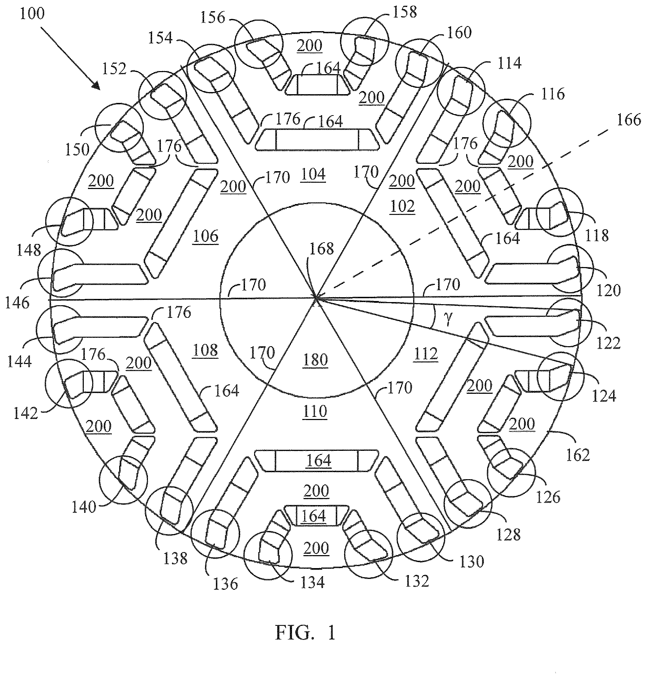

Figure 1 illustrates an example not covered by the claimed invention of a sheet 100 of a six-pole rotor of an electric motor. At least one polar sector 102, 104, 106, 108, 110, 112 has a reflection asymmetry within said at least one polar sector 102 to 112. The reflection asymmetry in said at least one polar sector 102 to 112 is associated with outer flux barriers 114, 116, 118, 120, 122, 124, 126, 128, 130, 132, 134, 136, 138, 140, 142, 144, 146, 148, 150, 152, 154, 156, 160. The outer flux barriers 114 to 160 are adjacent to or at an outer contour 162 of the sheet 100. Here the adjacent means directly adjacent. The outer flux barriers 114 to 160 are apertures in the sheet 100. A flux barrier, *per se,* may include one or more aperture in a row. For example, flux barriers 154, 164 and 160 form a row. However, here the outer flux barriers 114 to 160 without other flux barriers 164 refer to the apertures which are directly adjacent to or at an outer contour 162. For example, the other magnetic flux barriers 164 which are not adjacent to or at an outer contour 162 don't belong to the outer flux barriers 114 to 160. The other flux barriers 164 are magnetically non-conductive.

The apertures, which may also be filled with solid material later in manufacturing process, control magnetic flux in the rotor. Different apertures of the flux barriers may be separated with relatively thin solid material extensions called bridges 176 (marked here and there in Figure 1) which may saturate magnetically and may thus become a part of a row-like flux barrier. Between the row-like flux barriers there are areas (similar to those between the poles) which are paths 200 for magnetic flux.

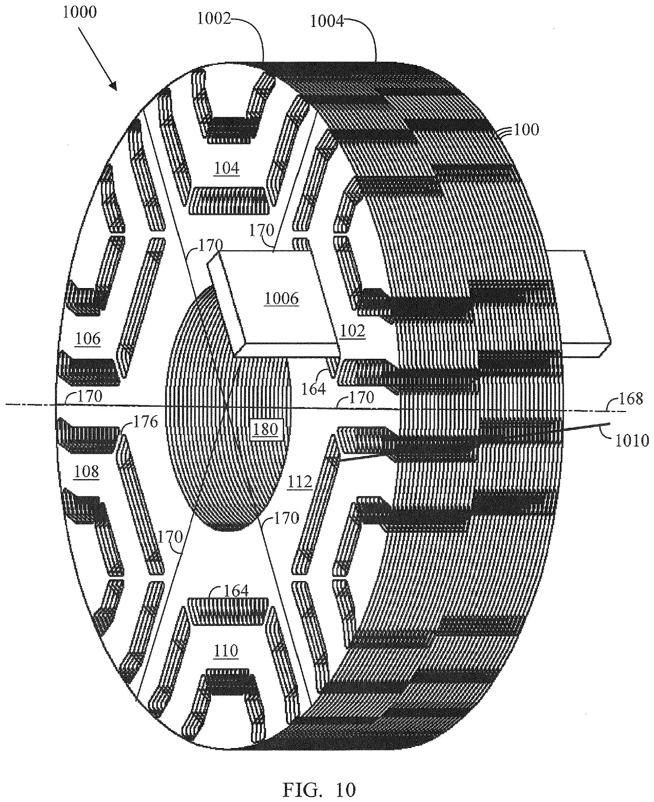

An aperture of the outer flux barrier 114 continues from the outer contour 162 of the sheet 100 to the bridge 176. The perpendicular lines crossing through the aperture 114 mark edges of magnets which may be inserted in the aperture 114. The same applies to the perpendicular lines within the other apertures of the outer flux barriers 114 to 160. Correspondingly, the perpendicular lines within the apertures of the other flux barriers 164 mark the edges of magnets (see Figure 10 where a magnet is shown in a flux barrier).

In more detail, the flux barriers are areas with low magnetic flux conductivity (= high magnetic resistivity = high reluctance) in synchronous reluctance machines (SynRM). Flux barriers are used to get rotor magnetically inhomogeneous so that magnetic flux prefers to go through rotor in certain paths. These paths were called flux paths. For keeping SynRM rotor magnetized, the constant energy is needed. This could be seen in higher needed motor current and lower power factor. There are also thinner parts for manufacturing reasons called as (supporting) bridges. They are as thin as it is possible for mechanical strength. Also the bridges should be saturated with the same magnetizing current.

In permanent magnet assisted synchronous reluctance machine, the flux barriers are at least partially filled by permanent magnets. Then the magnets will magnetize the rotor and saturate also the bridges between the flux paths. Rotor magnetizing current is not needed (at least not so much depending from the amount of magnets) and power factor is very good. Also the efficiency of SynRM increase a lot with permanent magnets.

The circles which are drawn in Figure 1 and which are around each end of the outer flux barriers 114 to 160 clarify the reference to the outmost parts of the flux barriers, because the flux barriers may comprise also other magnetic flux barriers 164 in the sheet 100 (number 164 is mainly marked in polar sector 110 but similar or identical magnetic flux guides are also in other polar sectors). The other flux barriers 164 may also be called inner flux barriers because no part of them is adjacent to or at an outer contour 162 of the sheet 100.

The reflection asymmetry can be seen in the polar sector 102 such that the outer flux barriers 114 to 120 are reflection asymmetric with respect to any radial inner line 166 within the polar sector 102. Each possible radial inner line 166 stretches from a center of the round sheet 100 to the outer contour 162 of the sheet 100, the center being a rotation axis 168 of the rotor.

The reflection asymmetry can be seen in a single polar sector 102 to 112 such that the outer flux barriers (114 to 120), (122 to 128), (130 to 136), (138 to 144), (146 to 152) and (154 to 160) of said single polar sector 102 to 112 are reflection asymmetric with respect to any radial inner line 166 within said single polar sector 102 to 112 having the outer flux barriers (114 to 120), (122 to 128), (130 to 136), (138 to 144), (146 to 152) and (154 to 160).

The radial inner line 166 may be at least approximately in the middle of radial border lines 170 of any one of the polar sectors 102 to 112. In the middle of the sheet 100 there is an axial aperture 180 for a shaft of the rotor.

The reflection symmetry may also be called mirror symmetry. The radial inner line 166 is the mirror line of the reflection symmetry. The radial inner line 166 is a straight line with no curves one end of which is at the rotation axis 168 of the rotor. The radial inner mirror line 166 may be drawn at any direction or angle in the polar sector 102 without having the reflection symmetry in the polar sector 102. The same is also true for all other polar sectors 104 to 112.

In an embodiment, at least one outer flux barrier 114 to 160 is a closed hole in the sheet 100. That is, material of the sheet surrounds the aperture of the flux barrier 114 to 160. Then a materialistic bridge is between the outer contour of the sheet and the aperture of the outer flux barrier 114 to 160.

In an embodiment, the outer contour of the sheet 100 is disconnected from the at least one skewed outer flux barrier 114 to 160.

As shown in an example of Figure 1, not covered by the claimed invention, every polar sector 102 to 112 may be identically reflection asymmetric with respect to any of its radial inner lines 166. In an embodiment, every polar sector 102 to 112 may be similarly reflection asymmetric with respect to any of its radial inner lines 166 which doesn't require equal asymmetry but it is enough that a degree of similarity of asymmetry is higher than a predetermined threshold. Similarity may be measured using correlation in a mathematical manner. The predetermined threshold may be about 50 % in a scale 0 % to 100 %, where 100 % means total similarity/correlation and 0 % means no similarity/correlation at all.

In an example not covered by the claimed invention, every pair of adjacent polar sectors 102 to 112 may be identically reflection asymmetric with respect to the radial border line 170 between the adjacent polar sectors 102 to 112. Here also, adjacent means directly adjacent. In an embodiment, every pair of the adjacent polar sectors 102 to 112 may be similarly reflection asymmetric with respect to the radial border line 170 therebetween because equal asymmetry isn't required but it is enough that a degree of similarity of asymmetry is higher than a predetermined threshold. Here the reflection asymmetry is associated with the outer flux barriers 114 to 160.

The reflection asymmetry may be achieved by skewing the outer flux barriers 114 to 160. The skewing may mean that a middle line of an outer flux barrier 114 to 160 bends, has a curve or is curved.

A derivative of the function that defines an outline of a flux barrier 114 to 160 may change its value in a continuous manner or abruptly at a location where the skewing starts. The derivative may change its value in a corresponding manner on opposite sides of the flux barrier at locations which are at least approximately the closest to each other when measured in a linear manner through the flux barrier 114 to 160. That the derivative may change its value in the corresponding manner on opposite sides of the flux barrier may mean that the derivatives have the same sign in a Cartesian coordinate system.

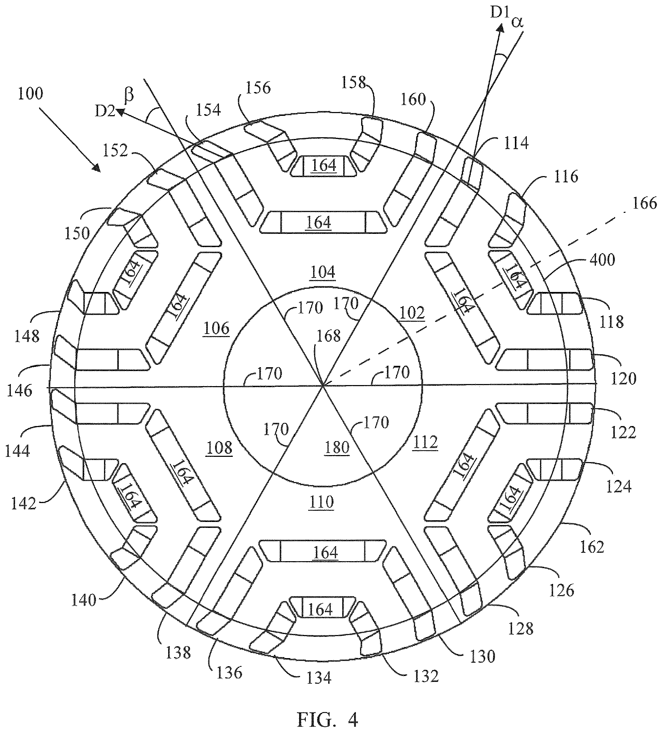

A derivative of the function that defines a centerline or other skew direction of a flux barrier 114 to 160 may change its value in a continuous manner or abruptly at a location where the skewing starts. The derivative of the centerline or other skew direction may be defined in a Cartesian coordinate system. A skew direction D1, D2 which may be the centerline is shown in Figure 4.

In an example not covered by the claimed invention, a length of the skewed part may be at least half of a length of the middle line of the outer flux barrier 114 to 160. In an example not covered by the claimed invention, a length of the skewed part may be at least half of thickness of the skewed part, where the directions of the length and the thickness are perpendicular to each other. The direction of the length is at least approximately parallel to the longitudinal axis of the outer flux barrier 114 to 160.

In an embodiment, at least one pair of the adjacent polar sectors (102, 104), (104, 106), (106, 108), (108, 110), (110, 112) and/or (112, 102) may be reflection asymmetric to each other with respect to a radial border line 170 therebetween. Here the reflection asymmetry is associated with the outer flux barriers 114 to 160.

In an embodiment, the outer flux barriers 114 to 160 of any two polar sectors 102 to 112 may be located in a reflection asymmetric manner with respect to the radial border line 170 between the two polar sectors 102 to 112.

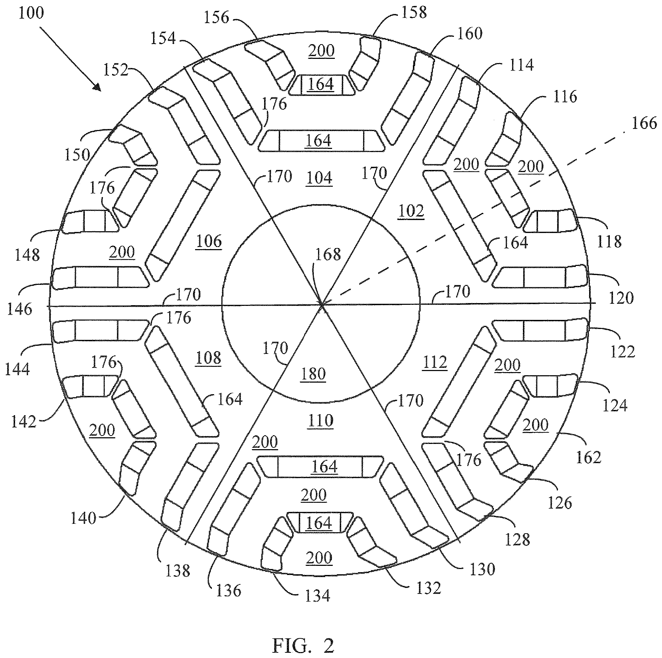

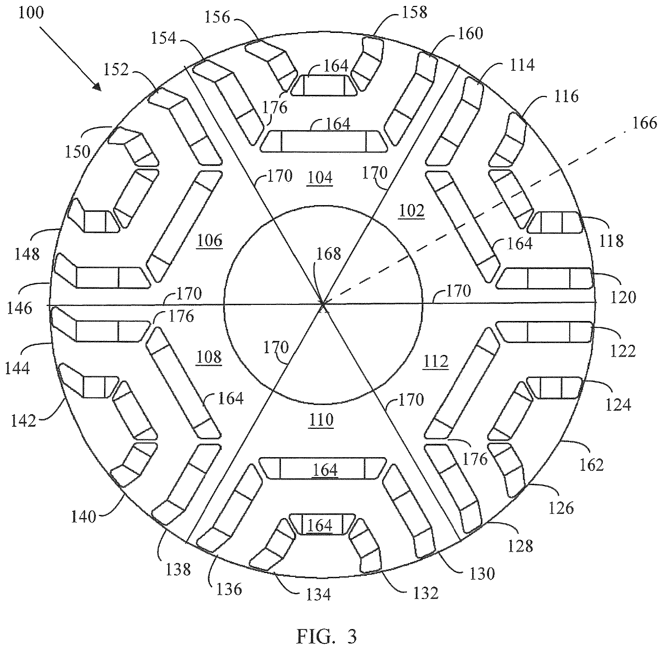

According to the invention and as illustrated in Figures 2 and 3, a part of the polar sectors 102 to 112 or every polar sector 102 to 112 may be differently reflection asymmetric with respect to any of its radial inner lines 166. As shown in embodiments of Figures 2 and 3, every pair of the adjacent polar sectors 102 to 112 may be differently reflection asymmetric with respect to the radial border line 170 therebetween. Here also the reflection asymmetry is associated with the outer flux barriers 114 to 160.

In an embodiment an example of which is illustrated in Figure 3, no pair of the adjacent polar sectors 102 to 112 may be similarly reflection asymmetric with respect to the radial border line 170 therebetween.

In an embodiment, at least two of the polar sectors 102 to 112 may be similarly reflection asymmetric with respect to the radial border line 170 therebetween because totally equal asymmetry isn't necessarily required.

In an embodiment, at least two of the polar sectors 102 to 112 may be identically reflection asymmetric with respect to the radial border line 170 therebetween, and at least two other of the polar sectors 102 to 112 may be differently reflection asymmetric with respect to the radial border line 170 therebetween.

In an embodiment at least pair of the adjacent polar sectors 102 to 112 may be similarly reflection asymmetric with respect to the radial border line 170 therebetween, and at least one pair of the adjacent polar sectors 102 to 112 may be differently reflection asymmetric with respect to the radial border line 170 therebetween.

In an embodiment, at least one pair of the adjacent polar sectors 102 to 112 may be identically reflection asymmetric with respect to the radial border line 170 therebetween, and at least one pair of the adjacent polar sectors 102 to 112 may be differently reflection asymmetric with respect to the radial border line 170 therebetween.

In an embodiment examples of which are shown in Figures 1 to 4, magnetic flux barriers 164 of each polar sectors 102 to 112, which are closer to the rotational axis 168 of the rotor than the outer flux barriers 114 to 160, have the reflection symmetry with respect to a single radial inner line 166.

In embodiments examples of which are illustrated in Figures 1, 2, 3, 4, the magnetic flux barriers 164 of any polar sectors 102 to 112 may be reflection symmetric within a circle 400 centered at rotation axis 168 of the rotor with respect to the radial inner line 166 of corresponding polar sector 102 to 112. The radius of the circle 400 may be at maximum a distance from a center of the sheet 100 to a nearest outer flux barrier 114 to 160. The distance may be from the center of the sheet 100 to a nearest outline of the nearest outer flux barrier 114 to 160. The nearest outer flux barrier 114 to 160 is the one to which the linear distance is the shortest, i.e. has the smallest value. The radius of the circle 400 may be at maximum a distance from a center of the sheet 100 to a point where at least one of the flux barriers 114 to 160 starts to skew.

In embodiments examples of which are illustrated in Figures 1, 2, 3, 4, the magnetic flux barriers 164 of any two directly adjacent polar sectors 102 to 112 may be reflection symmetric with respect to the radial border line 170 therebetween within the circle 400 centered at rotation axis 168 of the rotor, and the radius of the circle 400 being at maximum a distance from a center of the sheet 100 to the nearest point of skew of the outer flux barriers 114 to 160.

In an embodiment examples of which are shown in Figures 1 to 4, magnetically non-conductive flux barriers 164 of each polar sector 102 to 112, the magnetic flux barriers 164 being closer to the rotational axis 168 of the rotor than the outer flux barriers 114 to 160, may have a rotational symmetry about the rotational axis 168 of the rotor when rotated discretely polar sector by polar sector.

In an embodiment examples of which are shown in Figures 1 to 4, magnetic flux barriers 164 of each polar sectors 102 to 112, the magnetic flux barriers 164 being closer to the rotational axis 168 of the rotor than the outer flux barriers 114 to 160, may have a rotational symmetry about a diametric axis which goes through the rotational axis 168 of the rotor and along a radial border line 170 or a line like the radial inner line 166 in the middle of two radial border lines 170. The diametric axis is perpendicular to the rotation axis 168 of the rotor and goes through the rotation axis 168 of the rotor.

In an embodiment, each sheet has at least one magnetic flux barrier 164 in each polar sector 102 to 112, and the magnetic flux barriers 164 may be rotational symmetric with respect to rotations by 360°/P, where P is the number of poles of the rotor.

In an embodiment, the polar sectors 102 to 112 at opposite sides of the sheet 100 may be rotationally symmetric to each other with respect to the rotation axis 168 of the rotor.

In an embodiment an example of which is illustrated in Figure 4, a skew direction D1 of at least one of the outer flux barriers 114 to 160 (for example 114) of one of the polar sectors 102 to 112 (in this example 102) related to a radial border line 170 of said polar sector 102 to 112 may deviate with respect to a skew direction D2 of the corresponding outer flux barriers 114 to 160 (in this example 154) of another of the polar sectors 102 to 112 (in this example 104) related to a corresponding border line 170 of said another of the polar sectors 102 to 112 (in this example 104). The skew direction D1, D2 may be parallel to a longitudinal axis, a centerline or the like (shown with arrow in Figure 4) of the outer flux barriers 114 to 160. That is, each of the outer flux barriers 114 to 160 may be (as if) rotated, tilted, shifted or skewed with respect to a nearest magnetic flux barrier 164. The skew direction D1, D2 with respect to the nearest radial border line 170 of the corresponding polar sector 102 to 112, which corresponds to rotation or tilt angles α, β, may thus be different in different polar sectors 102 to 112.

In an embodiment, skew directions (D1) of the outer flux barriers 114 to 160 of the polar sectors 102 to 112 related to radial border lines 170 of said polar sectors 102 to 112 may deviate by predetermined angles with respect to skew directions (D2) of the corresponding outer flux barriers 114 to 160 of other polar sectors 102 to 112 related to corresponding radial border lines 170 of said other polar sectors 102 to 112. The predetermined angle may then be determined as α - β or β - α.

In the example of Figure 2, the outer flux barriers 118 to 124 have an identically skewed direction of the outer flux barriers 142 to 148 at the opposite side of the sheet. In Figure 2, these flux barriers 118 to 124 and 142 to 148 have a directional angle of 0.5°, for example, with respect to the corresponding radial border lines 170. That is why the outer part of the outer flux barrier 118 to 124 and 142 to 148 is slightly skewed. Additionally, the outer flux barriers 114, 116, 158, 160 have an identically skewed direction of the outer flux barriers 134 to 140 at the opposite side of the sheet. In Figure 2, these flux barriers 114, 116, 158, 160 and 134 to 140 have a directional angle of 1.5°, for example, with respect to the corresponding radial border lines 170. That is why the outer part of the outer flux barrier 114, 116, 158, 160 and 134 to 140 is more skewed. Finally, the outer flux barriers 150 to 156 have an identically skewed direction of the outer flux barriers 126 to 132 at the opposite side of the sheet. In Figure 2, these flux barriers 150 to 156 and 126 to 132 have a directional angle of 2.5°, for example, with respect to the corresponding radial border lines 170. That is why the outer part of the outer flux barrier 150 to 156 and 126 to 132 is most skewed. The directional angles don't need to be 0.5°, 1.5° and 2.5° but they may be any angles which fulfill the following conditions: each angle is equal or smaller than a sectorial angle γ between directly adjacent outer flux barriers 114 to 160 in the same half of a polar sector 102 to 112, and the three angles have different values. Figure 2 holds for a six-pole rotor. In a similar manner, the number of different directions for the outer flux barriers 114 to 160 may be P/2, where P is the number of poles.

The example of Figure 2 can instead refer to an embodiment where the outer edges of the outer flux barriers 118 to 124 and 142 to 148 have been shifted by a counterclockwise rotation, the value of which is about 0.5°, for example, with respect to the corresponding radial border lines 170. That is why the outer part of the outer flux barrier 118 to 124 and 142 to 148 is slightly skewed. The flux barriers 114, 116, 158, 160 and 134 to 140 have, in a similar manner, been shifted by a counterclockwise rotation, the angle of which is 1.5°, for example, with respect to the corresponding radial border lines 170. That is why the outer part of the outer flux barrier 114, 116, 158, 160 and 134 to 140 is more skewed. The flux barriers 150 to 156 and 126 to 132 have been shifted by a counterclockwise rotation, the angle of which is 2.5°, for example, with respect to the corresponding radial border lines 170. That is why the outer part of the outer flux barrier 150 to 156 and 126 to 132 is most skewed. Figure 2 holds for a six-pole rotor. In a similar manner, the number of different directions for the outer flux barriers 114 to 160 may be P/2, where P is the number of poles.

In Figure 3, the polar sectors 102 to 112 according to the invention are differently reflection asymmetric such that the skew directions of the outer flux barriers 114 to 160 vary as a function of a polar coordinate of the polar sector 102 to 112. The function may be deterministic or random. The polar coordinate expresses the direction at which the polar sector 102 to 112 is located seen from the center i.e. rotation axis 168. The polar coordinate refers to an angle of the inner radial line 166 of each polar sector 102 to 112 with respect to a desired reference coordinate which may be freely chosen.

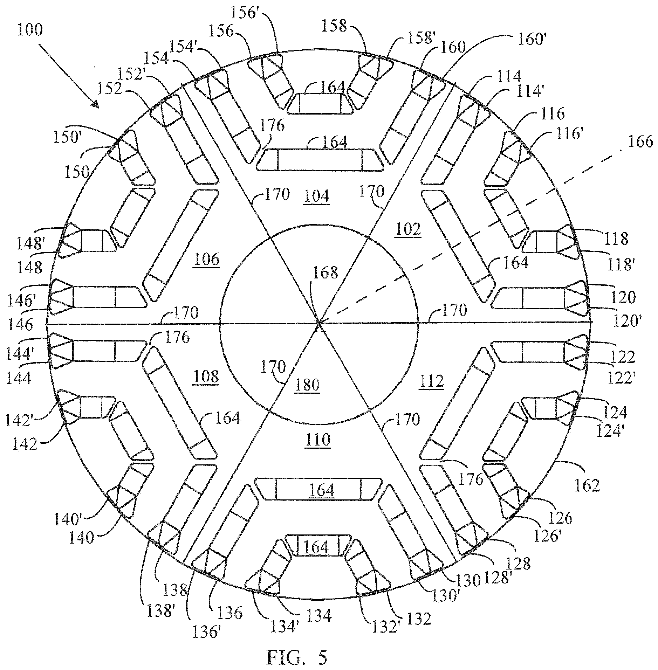

Figure 5 illustrates an example where two sheets 100, 100', which are identical with the sheet 100 in Figure 1, are overlapping each other in a co-centered manner. In an example not covered by the claimed invention, both polar sectors 102 to 112 may be identically reflection asymmetric with respect to the radial inner line 166, and a first sheet 100' of a pair of sheets 100, 100' may be in a different position with respect to a second sheet 100 of the pair of the sheets 100, 100' such that the first sheet 100' is rotated 180° around the diametric axis.

In an example not covered by the claimed invention, which is generalization of that of Figure 5, every pair of the directly adjacent polar sectors 102 to 112 may be identically reflection asymmetric with respect to the radial border line 170 therebetween, and one sheet 100' of any pair of sheets 100, 100' may be in a different position with respect to another sheet 100 of the pair of the sheets 100, 100' such that said one sheet 100' is rotated around the diametric axis.

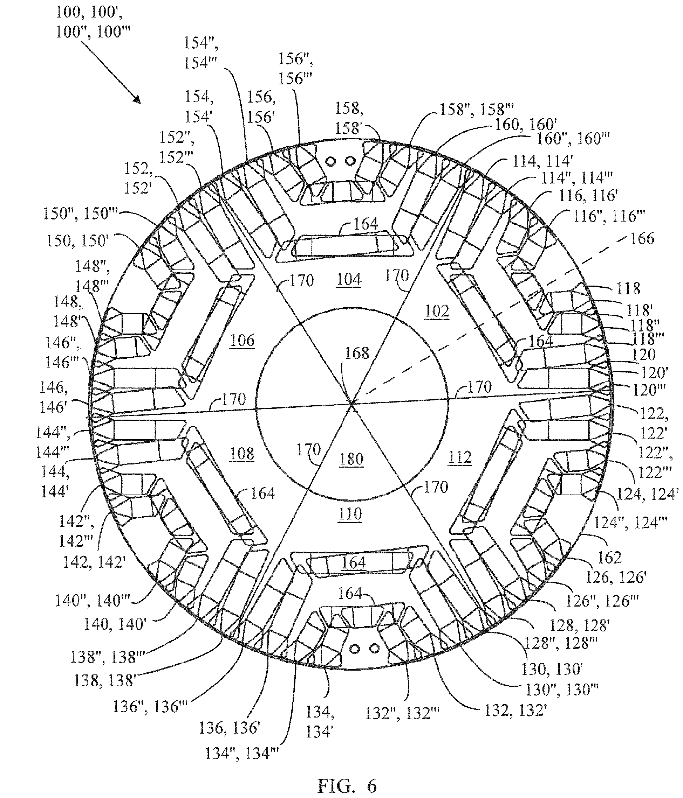

Figure 6 illustrates an example where sheets 100, 100', 100", 100''' are overlapping each other in a co-centered manner. The two pairs of the sheets 100, 100', 100", 100''', which refers to four sheets altogether, may be rotated with respect to each other around the rotational axis 168 of the rotor. The rotation between the pairs may be at most γ/2, where γ is the sectorial angle between directly adjacent outer flux barriers 114 to 160 in the same half of a polar sector 102 to 112 (see Figure 2). The pairs (100, 100'), (100", 100''') of sheets may be those illustrated in Figure 5. In this manner, the outer flux barriers 114 to 160, 114' to 160', 114" to 160" of the two pairs of sheets may be distributed in a desired manner on or at the outer surface of stack of the pairs. In Figure 6, only outer flux barriers 118, 118', 118", 118''', 120, 120', 120", 120''' have been separately marked. Other outer flux barriers have been marked only in pairs (for simplicity).

In an embodiment which is an extended version of what is illustrated in Figure 6, successive N pairs of sheets 100, 100', 100", 100''' may be rotated around the rotational axis 168 of the rotor with respect to each other by at most γ/N, where γ is a sectorial angle between directly adjacent outer flux barriers 114 to 160 in the same half of a polar sector 102 to 112. The pairs of sheets may be identical with those illustrated in Figure 5. In an embodiment, the rotation may be performed in an alternating manner such that largest angle between any sheet is γ/N or 2γ/N. In these manners, the outer flux barriers 114 to 160, 114' to 160', 114" to 160", 114''' to 160''' of the 2N sheets may be distributed in a desired manner on or at the outer surface of stack of the pairs of 2N sheets.

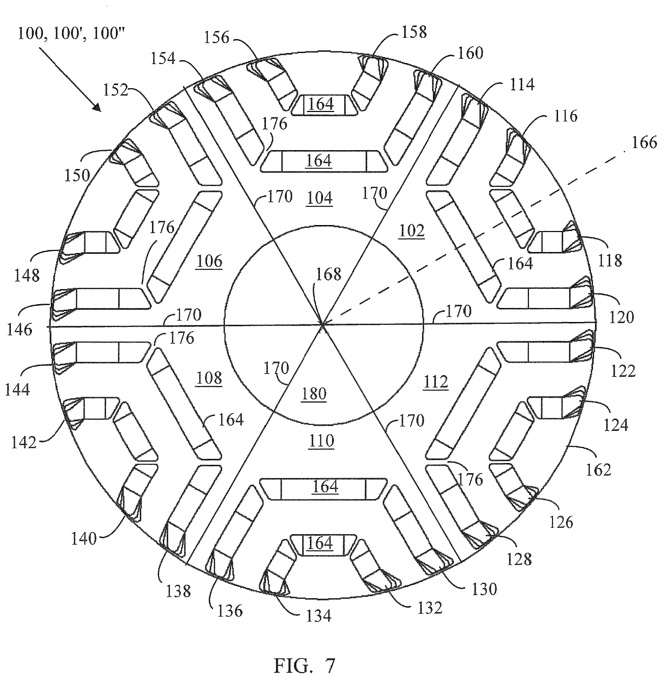

In an embodiment an example of which is illustrated in Figure 7, a stack of three overlapping sheets 100, 100', 100", which are identical with that in Figure 2, may be rotated with respect to the rotation axis 168 of the rotor such that successive sheets 100, 100', 100" have 60° rotational difference with each other. The rotation is performed in the same direction and thus the outmost sheets 100, 100" have been rotated by 120°. Figure 7 holds for a six-pole rotor. The rotation angles of P/2 sheets with respect to each other may be 360°/P. In these manners, the outer flux barriers 114 to 160 of the sheets may be distributed in a desired manner on or at the outer surface of stack.

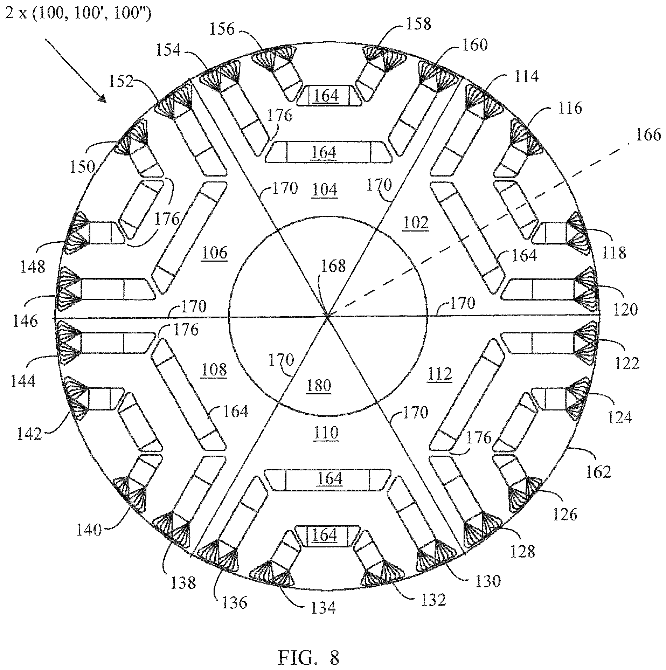

In an embodiment an example of which is illustrated in Figure 8, two stacks each having three sheets 100, 100', 100" which are identical to the three sheets of Figure 7 have been overlapped with each other. However, one stack of the two stacks has been rotated about the diametric axis. This results in a distribution of the directions of the outer flux barriers 114 to 160 spread in positive and negative angles with respect to the corresponding radial lines 170. In this manner, the outer flux barriers 114 to 160 of the sheets may be distributed in a desired manner on or at the outer surface of the rotor.

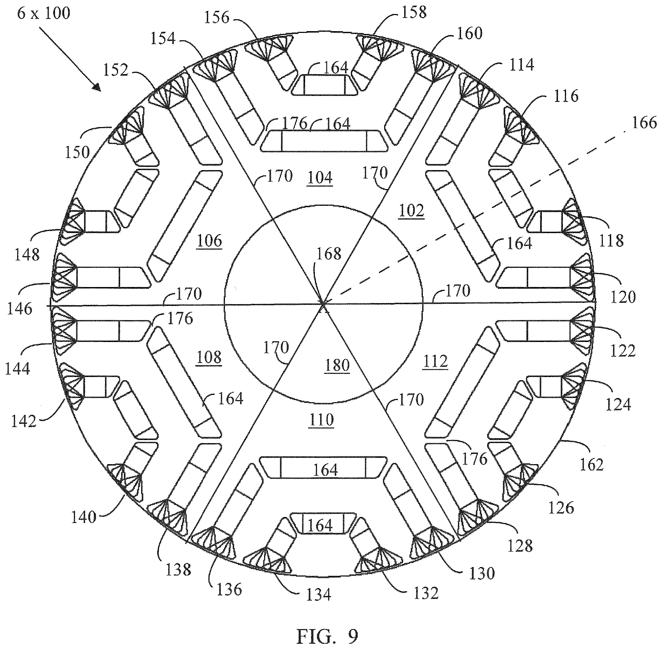

In an embodiment an example of which is illustrated in Figure 9, a stack with six sheets 100 of Figure 3 is presented. Because the skew directions of the outer flux barriers 114 to 160 vary as a function of a polar coordinate of the polar sector 102 to 112, the outer flux barriers 114 to 160 spread in positive and negative angles with respect to the corresponding radial lines 170. In this manner, the outer flux barriers 114 to 160 of the sheets may be distributed in a desired manner on or at the outer surface of a stack or the rotor.

In an embodiment, every polar sector 102 to 112 may be differently reflection asymmetric with respect to the inner radial line 166, 100', the reflection asymmetry being associated with outer flux barriers 114 to 160, in two sheets 100, 100' which may be identical with the sheet in Figures 2 or 3. One of the sheets 100' may be rotated around the rotational axis 168 of the rotor by 360°/P with respect to another of the sheets 100, where P is the number of poles. The rotation of the sheet 100 causes the outer flux barriers 114' to 160' of the sheet 100' to have an opposite skew to the outer flux barriers 114 to 160 of the sheet 100. That is, the outer flux barriers 114' to 160' of the sheet 100' are at least partly in a different location than the corresponding outer flux barriers 114 to 160 of the sheet 100.

In an embodiment, every pair of the directly adjacent polar sectors 102 to 112 are differently reflection asymmetric with respect to the radial border line 170 therebetween, and one sheet 100' of a pair of sheets is rotated around a rotational axis 168 of the rotor by 360°/P with respect to another sheet 100 of the pair of sheets.

Correspondingly, one of the sheets 100' may be rotated around the rotational axis 168 of the rotor by 360°/n with respect to another of the sheets 100 instead of 360°/P, where n is n = P/i or n = iP, where i is a positive integer and P is the number of poles.

In an embodiment, a stack having more than two sheets, one of the sheets 100 may be rotated around the rotational axis 168 of the rotor by 360°/P or 360°/n with respect a directly previous sheet 100'.

In an embodiment, in each sheet 100 directions of the outer flux barriers 114 to 160 of a polar sector 102 to 112 in relation to the radial border line 170 of said polar sector 102 to 112 deviate by predetermined angles with respect to directions of the corresponding outer flux barriers 114 to 160 of another polar sector 102 to 112 in relation to a corresponding border line 170 of said another polar sector 102 to 112. Then each of the successive sheets 100', 100", 100''' may be rotated by 360°/P or its multiple with respect to a previous sheet 100, 100', 100".

Figure 10 illustrates an example of the rotor 1000 which comprises at least two stacks 1002, 1004 which, in turn, comprise a plurality of the sheets 100 which are in Figure identical with the sheet 100 in Figure 1 (only a few sheets have been marked in Figure 5).

In an embodiment, a plurality of sheets 100 may be combined by overlapping axial apertures 180 of the plurality of the sheets 100 for making the rotor 1000.

In an embodiment an example of which is illustrated in Figure 10, at least one magnetic flux barrier 164 of one or more polar sectors 102 to 112, the at least one magnetic flux barrier 164 being closer to the rotational axis 168 of the rotor 1000 than the outer flux barriers 114 to 160, has a magnet 1006 inserted therein. In an embodiment, at least one magnet 1006 may extend through the whole rotor 1000. In an embodiment, at least one magnet 1006 may extend through only one stack of the rotor, while the rotor may have a plurality of stacks. In an embodiment, at least one magnet 1006 may extend through L stacks of the rotor, while the rotor may have M stacks, where L and M are integers and M is larger than L. In this manner, the magnet 1006 may be pushed inside a hole through a stack or the whole rotor from either end of the hole.

In Figure 10, it can be seen how the outer flux barriers 114 to 160 of the sheets may be distributed in a desired manner on or at the outer surface of a stack or the rotor. The magnet 1006 inserted in the magnetic flux barrier 164 is suitable for high or low speed applications and it can tolerate high centrifugal forces which results in durability in use.

The rotors of electric machines can be skewed rotors by collecting rotor stack from 2 to P (= number of poles) shorter stacks, each stack having at least one sheet 100, heat rotor stack, install rotor shaft inside the rotor aperture 180, and finally install magnetized magnets 1006 in the holes formed of reflection and/or rotational symmetric magnetic flux barriers 164 of the rotor 1000. The rotor shaft may be installed with or without thermal expansion matching. The installation of the rotor shaft inside the rotor aperture 180 may be secured with glue. The magnets 1006 may also be installed in a similar manner.

A direction of a continuous line 1010 of each of the outer flux barriers on the surface of the rotor 1000 can be made to deviate from the direction of the axis 168 of rotation of the rotor 1000. The slight angular deviation therebetween brings with advantages of reduction of the torque ripple and quiet running of the machine because the magnetic hum is decreased. Additionally, iron losses may also be reduced.

In general, the word "adjacent" may mean "directly adjacent". That is, two adjacent parts have no third part between them but the two parts are directly side by side.

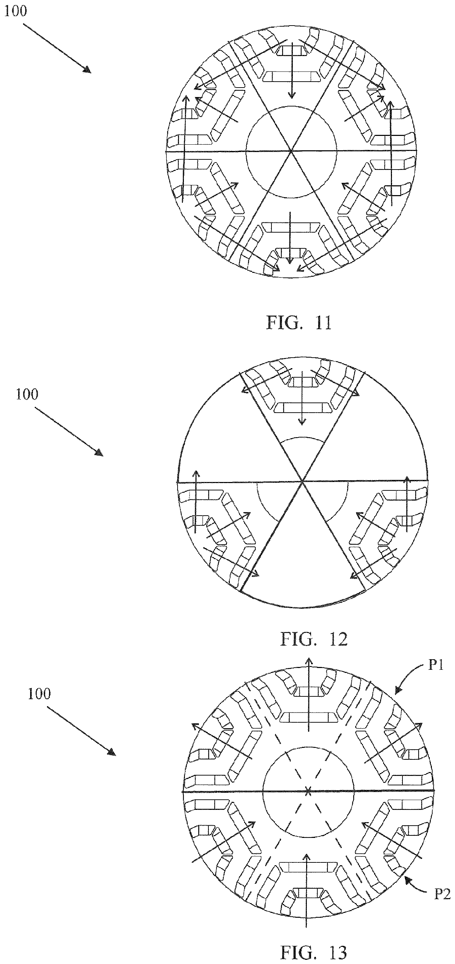

Figure 11 illustrates an example not covered by the claimed invention of magnetization in the rotor of six poles (P = 6) and n = 6. In this kind of embodiment, the magnetization caused by magnets 1006 is directed from every second pole to the neighboring poles and towards the rotation axis of the rotor. The magnetic flux is directed from the neighboring poles and the rotation axis of the rotor towards the poles in the rest of the poles.

Figure 12 illustrates an example not covered by the claimed invention where there are six poles (P = 6) but n = 3. This embodiment may be called a consequent pole rotor. Only every second of the poles has a magnet or magnets 1006. In this kind of embodiment, the magnetization caused by magnets 1006 is directed from every second pole to the neighboring poles and towards the rotation axis of the rotor.

Figure 13 illustrates an example not covered by the claimed invention where the number of poles P1, P2 is two (P = 2). Still, each pole is divided in three sections leading to n = 6 (there are dashed lines between the sections while the poles are separated with a thicker continuous line). In one pole (P1) the direction of magnetization is outwards from the rotor. In another pole (P2), the direction of magnetization is towards the rotation axis of the rotor.

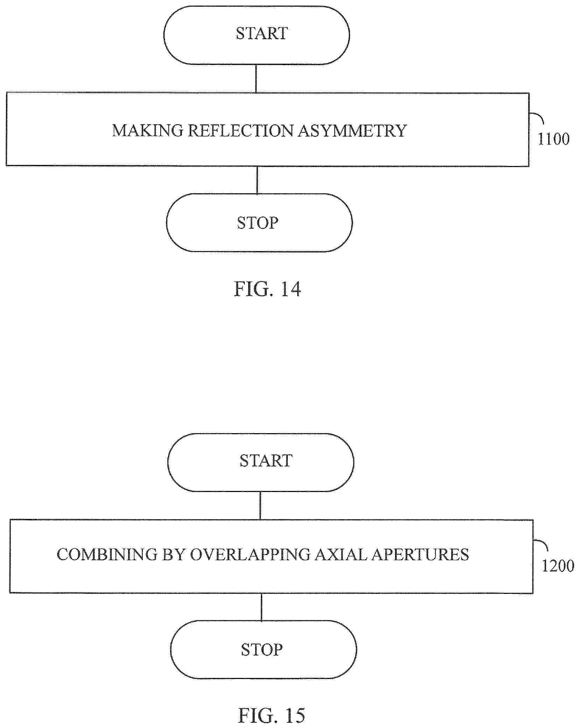

Figure 14 is a flow chart of the manufacturing method of sheet of a rotor of an electric machine. In step 1100, the outer flux barriers 114 to 160 adjacent to or at an outer contour 162 of at least one polar sector 102 to 112 of at least one of the sheets 100, 100', 100", 100''' are made reflection asymmetric to each other with respect to a radial line 166 within the polar sector 102 to 112.

Figure 15 is a flow chart of the manufacturing method of a rotor of an electric machine. In step 1200 a plurality of sheets 100, 100', 100", 100''' are combined by overlapping axial apertures 180 of the plurality of the sheets 100, 100', 100", 100''' for making the rotor 1000.

It will be obvious to a person skilled in the art that, as technology advances, the inventive concept can be implemented in various ways. The invention and its embodiments are not limited to the example embodiments described above but may vary within the scope of the claims.

## Claims

1. A sheet (100) of a rotor of an electric machine, wherein at least two polar sectors (102 to 112) of the sheet (100) have a reflection asymmetry with respect to any radial inner line (166), the reflection asymmetry being associated with outer flux barriers (114 to 160) adjacent to or at an outer contour (162) of the sheet (100), and the radial inner line (166) stretching from a center of the round sheet (100) to the outer contour (162) of the sheet (100), the center being a rotation axis (168) of the rotor;
the sheet (100) comprises inner flux barriers (164), which are closer to the rotational axis (168) of the rotor than the outer flux barriers (114 to 160), and the outer flux barriers (114 to 160), which are surrounded by material of the sheet, are separated with bridges (176) from the inner flux barriers (164) such that the outer flux barriers (114 to 160) are between an outer contour (162) of the sheet and the bridges (176), the bridges (176) being configured to saturate magnetically;
a middle line of any of the outer flux barriers (114 to 116) is configured to bend or curve in order to skew the outer flux barriers (114 to 160) and cause the reflection asymmetry; and at least two polar sectors (102 to 112) are differently reflection asymmetric such that the skew directions (D1, D2) of the outer flux barriers (114 to 160) of different polar sectors vary as a function of a polar coordinate of the polar sector (102 to 112), wherein the polar coordinate refers to an angle of the inner radial line (166) of each polar sector (102 to 112) with respect to a desired reference coordinate which may be freely chosen.

2. The sheet of a rotor of claim 1, **characterized in that** at least one pair of the adjacent polar sectors ((102, 104), (104, 106), (106, 108), (108, 110), (110, 112) and/or (112, 102)) are reflection asymmetric to each other with respect to a radial border line (170) therebetween.

3. The sheet of a rotor of claim 1, **characterized in that** at least two of the adjacent polar sectors (102 to 112) are identically reflection asymmetric; and at least two of the adjacent polar sectors (102 to 112) are differently reflection asymmetric.

4. The sheet of a rotor of claim 1, **characterized in that** the polar sectors (102 to 112) at opposite sides of the sheet (100) are rotationally symmetric with respect to the rotation axis (168) of the rotor (1000).

5. The sheet of a rotor of claim 1, **characterized in that** the skew direction (D1) with respect to a nearest border line (170) of a polar sector (102 to 112) is arranged to deviate with respect to the skew direction (D2) related to a nearest border line (170) of another of the polar sectors (102 to 112).

6. The sheet of a rotor of claim 1, **characterized in that** inner magnetic flux barriers (164) of each of the polar sectors (102 to 112), which are closer to the rotational axis (168) of the rotor than the outer flux barriers (114 to 160), have at least one of the following: the reflection symmetry, rotational symmetry about a diametric axis and rotational symmetry about the rotational axis (168) about the rotor (1000).

7. The sheet of a rotor of claim 1, **characterized in that** at least one outer flux barrier (114 to 160) is a closed hole in the sheet (100) such that the closed hole has material of the sheet surrounding the aperture of the flux barrier (114 to 160).

8. A rotor of an electric machine, **characterized in that** the rotor (1000) comprises a plurality of sheets (100, 100', 100", 100''') of claim 1.

9. The rotor of claim 8, **characterized in that** every polar sector (102 to 112) is differently reflection asymmetric with respect to any of its radial inner lines (166); and each sheet (100, 100', 100", 100''') is rotated around a rotational axis (168) of the rotor (1000) by 360°/n with respect a directly previous sheet (100, 100', 100", 100'''), where n is n = P/i or n = iP, where i is a positive integer and P is the number of poles.

10. The rotor of claim 8, **characterized in that** for each sheet (100, 100') of at least one pair of the sheets (100, 100') of the rotor, every polar sector (102 to 112) is identically reflection asymmetric with respect to any of its radial inner lines (166); and one sheet (100') of at least one pair of sheets (100, 100') is in a different position with respect to another sheet (100) of the at least one pair of the sheets (100, 100') such that it is rotated around a diametric axis.

11. The rotor of claim 10, **characterized in that** the rotor (1000) comprises N pairs of the sheets (100, 100'), the successive pairs of the sheets (100, 100') being rotated around the rotational axis (168) of the rotor (1000) by at most γ/N, where γ is a sectorial angle between directly adjacent outer flux barriers (114 to 160, 114' to 160', 114" to 160") in the same half of a polar sector (102 to 112).

12. A method of manufacturing sheets (100) of a rotor of an electric machine, the method comprising
making (1100) outer flux barriers (114 to 160) adjacent to or at an outer contour (162) of at least two polar sectors (102 to 112) of at least one of the sheets (100, 100', 100", 100''') reflection asymmetric with respect to any radial inner line (166) by making a middle line of any of the outer flux barriers (114 to 116) to bend or curve in order to skew the outer flux barriers (114 to 160), the radial inner line (166) stretching from a center of the round sheet (100) to the outer contour (162) of the sheet (100), the center being a rotation axis (168) of the rotor, and making at least two polar sectors (102 to 112) differently reflection asymmetric such that the skew directions (D1, D2) of the outer flux barriers (114 to 160) of different polar sectors vary as a function of a polar coordinate of the polar sector (102 to 112), wherein the polar coordinate refers to an angle of the inner radial line (166) of each polar sector (102 to 112) with respect to a desired reference coordinate which may be freely chosen; and
separating the outer flux barriers (114 to 160) with bridges (176) from inner flux barriers (164), which are closer to the rotational axis (168) of the rotor than the outer flux barriers (114 to 160), such that the outer flux barriers (114 to 160) are between an outer contour (162) of the sheet and the bridges (176); and surrounding the outer flux barriers (114 to 160) with material of the sheet (100), wherein the bridges (176) are configured to saturate magnetically,

13. The method of claim 12, **characterized by** making at least one pair of the adjacent polar sectors (102 to 112) is reflection asymmetric to each other.

14. The method of claim 12, **characterized by** combining a plurality of sheets (100, 100', 100", 100''') of claim 16 by overlapping axial apertures (180) of the plurality of the sheets (100, 100', 100", 100''') for making the rotor (1000).

## Patentansprüche

1. Blech (100) eines Rotors einer elektrischen Maschine, wobei mindestens zwei polare Sektoren (102 bis 112) des Blechs (100) eine Reflexionsasymmetrie in Bezug auf eine radiale innere Linie (166) aufweisen, wobei die Reflexionsasymmetrie mit äußeren Flusssperren (114 bis 160) in Verbindung steht, welche zu einem Außenumriss (162) des Blechs (100) benachbart oder darauf liegen, und sich die radiale innere Linie (166) von einer Mitte des runden Blechs (100) zu dem Außenumriss (162) des Blechs (100) erstreckt, wobei die Mitte eine Rotationsachse (168) des Rotors ist,
wobei das Blech (100) innere Flusssperren (164) umfasst, die näher an der Rotationsachse (168) des Rotors liegen als die äußeren Flusssperren (114 bis 160), und die äußeren Flusssperren (114 bis 160), die von einem Material des Blechs umgeben sind, derart durch Brücken (176) von den inneren Flusssperren (164) getrennt sind, dass die äußeren Flusssperren (114 bis 160) zwischen einem Außenumriss (162) des Blechs und den Brücken (176) liegen, wobei die Brücken (176) dafür gestaltet sind, sich magnetisch zu sättigen,
wobei eine Mittellinie von einer der äußeren Flusssperren (114 bis 116) dafür gestaltet ist, abzuknicken biegen oder sich zu krümmen, um die äußeren Flusssperren (114 bis 160) schrägzustellen und die Reflexionsasymmetrie zu bewirken, und
wobei mindestens zwei polare Sektoren (102 bis 112) unterschiedlich reflexionsasymmetrisch sind, so dass die Schrägstellungsrichtungen (D1, D2) der äußeren Flusssperren (114 bis 160) von unterschiedlichen polaren Sektoren als eine Funktion einer Polarkoordinate des polaren Sektors (102 bis 112) variieren, wobei die Polarkoordinate einen Winkel der inneren radialen Linie (166) jedes polaren Sektors (102 bis 112) in Bezug auf eine gewünschte Referenzkoordinate bezeichnet, die frei gewählt sein kann.

2. Blech eines Rotors nach Anspruch 1, **dadurch gekennzeichnet, dass** mindestens ein Paar der benachbarten polaren Sektoren ((102, 104), (104, 106), (106, 108), (108, 110), (110, 112) und/oder (112, 102)) in Bezug auf eine radiale Grenzlinie (170) dazwischen zueinander reflexionsasymmetrisch sind.

3. Blech eines Rotors nach Anspruch 1, **dadurch gekennzeichnet, dass** mindestens zwei der benachbarten polaren Sektoren (102 bis 112) identisch reflexionsasymmetrisch sind und mindestens zwei der benachbarten polaren Sektoren (102 bis 112) unterschiedlich reflexionsasymmetrisch sind.

4. Blech eines Rotors nach Anspruch 1, **dadurch gekennzeichnet, dass** die polaren Sektoren (102 bis 112) an entgegengesetzten Seiten des Blechs (100) in Bezug auf die Rotationsachse (168) des Rotors (1000) rotationssymmetrisch sind.

5. Blech eines Rotors nach Anspruch 1, **dadurch gekennzeichnet, dass** die Schrägstellungsrichtung (D1) in Bezug auf eine nächstgelegene Grenzlinie (170) eines polaren Sektors (102 bis 112) dafür angeordnet ist, in Bezug auf die Schrägstellungsrichtung (D2), die zu einer nächstgelegenen Grenzlinie (170) eines anderen der polaren Sektoren (102 bis 112) in Beziehung steht, abzuweichen.

6. Blech eines Rotors nach Anspruch 1, **dadurch gekennzeichnet, dass** innere magnetische Flusssperren (164) von jedem der polaren Sektoren (102 bis 112), die näher zur Rotationsachse (168) des Rotors liegen als die äußeren Flusssperren (114 bis 160), mindestens eines des Folgenden aufweisen: die Reflexionssymmetrie, Rotationssymmetrie um eine diametrale Achse und Rotationssymmetrie um die Rotationsachse (168) des Rotors (1000).

7. Blech eines Rotors nach Anspruch 1, **dadurch gekennzeichnet, dass** mindestens eine äußere Flusssperre (114 bis 160) ein geschlossenes Loch in dem Blech (100) ist, so dass das geschlossene Loch Material des Blechs aufweist, das die Öffnung der Flusssperre (114 bis 160) umgibt.

8. Rotor einer elektrischen Maschine, **dadurch gekennzeichnet, dass** der Rotor (1000) mehrere Bleche (100, 100', 100", 100''') nach Anspruch 1 umfasst.

9. Rotor nach Anspruch 8, **dadurch gekennzeichnet, dass** jeder polare Sektor (102 bis 112) in Bezug auf eine seiner radialen inneren Linien (166) anders reflexionsasymmetrisch ist und jedes Blech (100, 100', 100", 100''') in Bezug auf ein direkt vorheriges Blech (100, 100', 100", 100''') um 360°/n um eine Rotationsachse (168) des Rotors (1000) gedreht ist, wobei n n=P/i oder n=iP ist, wobei i eine positive Ganzzahl und P die Anzahl an Polen ist.

10. Rotor nach Anspruch 8, **dadurch gekennzeichnet, dass** für jedes Blech (100, 100') von mindestens einem Paar der Bleche (100, 100') des Rotors jeder polare Sektor (102 bis 112) in Bezug auf eine seiner radialen inneren Linien (166) identisch reflexionsasymmetrisch ist und ein Blech (100') mindestens eines Paares von Blechen (100, 100') in Bezug auf ein anderes Blech (100) des mindestens einen Paares der Bleche (100, 100') an einer anderen Position liegt, so dass es um eine diametrale Achse gedreht ist.

11. Rotor nach Anspruch 10, **dadurch gekennzeichnet, dass** der Rotor (1000) N Paare der Bleche (100, 100') umfasst, wobei die aufeinanderfolgenden Paare der Bleche (100, 100') um die Rotationsachse (168) des Rotors (1000) um höchstens γ/N gedreht sind, wobei γ ein Sektorenwinkel zwischen direkt benachbarten äußeren Flusssperren (114 bis 160, 114' bis 160', 114" bis 160") in der gleichen Hälfte eines polaren Sektors (102 bis 112) ist.

12. Verfahren zur Fertigung von Blechen (100) eines Rotors einer elektrischen Maschine, wobei das Verfahren Folgendes umfasst:
Herstellen (1100) äußerer Flusssperren (114 bis 160), die zu einem Außenumriss (162) von mindestens zwei polaren Sektoren (102 bis 112) mindestens eines der Bleche (100, 100', 100", 100''') benachbart oder auf diesem liegen, reflexionsasymmetrisch in Bezug auf eine radiale innere Linie (166), indem eine Mittellinie einer der äußeren Flusssperren (114 bis 116) abgeknickt oder gekrümmt wird, um die äußeren Flusssperren (114 bis 160) schrägzustellen, wobei sich die radiale innere Linie (166) von einer Mitte des runden Blechs (100) zu dem Außenumriss (162) des Blechs (100) erstreckt, wobei die Mitte eine Rotationsachse (168) des Rotors ist, und Herstellen mindestens zweier polarer Sektoren (102 bis 112) unterschiedlich reflexionsasymmetrisch, so dass die Schrägstellungsrichtungen (D1, D2) der äußeren Flusssperren (114 bis 160) von unterschiedlichen polaren Sektoren als eine Funktion einer Polarkoordinate des polaren Sektors (102 bis 112) variieren, wobei die Polarkoordinate einen Winkel der inneren radialen Linie (166) jedes polaren Sektors (102 bis 112) in Bezug auf eine gewünschte Referenzkoordinate bezeichnet, die frei gewählt werden kann, und
Trennen der äußeren Flusssperren (114 bis 160) durch Brücken (176) von inneren Flusssperren (164), die näher an der Rotationsachse (168) des Rotors liegen als die äußeren Flusssperren (114 bis 160), so dass die äußeren Flusssperren (114 bis 160) zwischen einem Außenumriss (162) des Blechs und den Brücken (176) liegen, und
Umgeben der äußeren Flusssperren (114 bis 160) mit Material des Blechs (100), wobei die Brücken (176) dafür gestaltet sind, sich magnetisch zu sättigen.

13. Verfahren nach Anspruch 12, **dadurch gekennzeichnet, dass** mindestens ein Paar der benachbarten polaren Sektoren (102 bis 112) reflexionsasymmetrisch hergestellt wird.

14. Verfahren nach Anspruch 12, **dadurch gekennzeichnet, dass** mehrere Bleche (100, 100', 100", 100''') nach Anspruch 16 kombiniert werden, indem axiale Öffnungen (180) der mehreren Bleche (100, 100', 100", 100''') überlappt werden, um den Rotor (1000) herzustellen.

## Revendications

1. Feuille (100) d'un rotor d'une machine électrique, au moins deux secteurs polaires (102 à 112) de la feuille (100) présentant une asymétrie de réflexion par rapport à une ligne intérieure radiale quelconque (166), l'asymétrie de réflexion étant associée à des barrières de flux extérieures (114 à 160) adjacentes à, ou au niveau d'un contour extérieur (162) de la feuille (100), et la ligne intérieure radiale (166) s'étendant depuis un centre de la feuille ronde (100) jusqu'au contour extérieur (162) de la feuille (100), le centre étant un axe de rotation (168) du rotor ;
la feuille (100) comprenant des barrières de flux intérieures (164), qui sont plus proches de l'axe de rotation (168) du rotor que les barrières de flux extérieures (114 à 160), et les barrières de flux extérieures (114 à 160), qui sont entourées par le matériau de la feuille, étant séparées par des ponts (176) des barrières de flux intérieures (164) de telle sorte que les barrières de flux extérieures (114 à 160) se situent entre un contour extérieur (162) de la feuille et les ponts (176), les ponts (176) étant configurés pour saturer magnétiquement ;
une ligne médiane de l'une quelconque des barrières de flux extérieures (114 à 116) étant configurée pour fléchir ou s'incurver afin d'incliner les barrières de flux extérieures (114 à 160) et occasionner l'asymétrie de réflexion ; et
au moins deux secteurs polaires (102 à 112) présentant des asymétries de réflexion différentes de telle sorte que les directions d'inclinaison (D1, D2) des barrières de flux extérieures (114 à 160) de secteurs polaires différents varient en fonction d'une coordonnée polaire du secteur polaire (102 à 112), la coordonnée polaire se rapportant à un angle que forme la ligne intérieure radiale (166) de chaque secteur polaire (102 à 112) avec une coordonnée de référence souhaitée qui peut être librement choisie.

2. Feuille d'un rotor selon la revendication 1, **caractérisée en ce qu'**au moins une paire de secteurs polaires adjacents ((102, 104), (104, 106), (106, 108), (108, 110), (110, 112) et/ou (112, 102)) présente une asymétrie de réflexion entre eux par rapport à une ligne de bordure radiale (170) les séparant.

3. Feuille d'un rotor selon la revendication 1, **caractérisée en ce qu'**au moins deux des secteurs polaires adjacents (102 à 112) présentent des asymétries de réflexion identiques ; et au moins deux des secteurs polaires adjacents (102 à 112) présentent des asymétries de réflexion différentes.

4. Feuille d'un rotor selon la revendication 1, **caractérisée en ce que** les secteurs polaires (102 à 112) de côtés opposés de la feuille (100) présentent une symétrie de rotation par rapport à l'axe de rotation (168) du rotor (1000).

5. Feuille d'un rotor selon la revendication 1, **caractérisée en ce que** la direction d'inclinaison (D1) par rapport à une plus proche ligne de bordure (170) d'un secteur polaire (102 à 112) est agencée de manière à s'écarter de la direction d'inclinaison (D2) relative à une plus proche ligne de bordure (170) d'un autre des secteurs polaires (102 à 112).

6. Feuille d'un rotor selon la revendication 1, **caractérisée en ce que** des barrières de flux magnétique intérieures (164) de chacun des secteurs polaires (102 à 112), qui sont plus proches de l'axe de rotation (168) du rotor que les barrières de flux extérieures (114 à 160), présentent au moins une des symétries suivantes : une symétrie de réflexion, une symétrie de rotation autour d'un axe diamétral et une symétrie de rotation autour de l'axe de rotation (168) du rotor (1000).

7. Feuille d'un rotor selon la revendication 1, **caractérisée en ce qu'**au moins une barrière de flux extérieure (114 à 160) est un trou fermé dans la feuille (100) de telle sorte que le trou fermé présente du matériau de la feuille qui entoure l'ouverture de la barrière de flux (114 à 160).

8. Rotor d'une machine électrique, le rotor (1000) étant **caractérisé en ce qu'**il comprend une pluralité de feuilles (100, 100', 100", 100''') selon la revendication 1.

9. Rotor selon la revendication 8, **caractérisé en ce que** chaque secteur polaire (102 à 112) présente une asymétrie de réflexion différente par rapport à l'une quelconque de ses lignes radiales intérieures (166) ; et chaque feuille (100, 100', 100", 100''') subit une rotation de 360°/n autour d'un axe de rotation (168) du rotor (1000) par rapport à une feuille immédiatement précédente (100, 100', 100", 100'''), n valant n = P/i ou n = iP, i étant un entier positif et P représentant le nombre de pôles.

10. Rotor selon la revendication 8, **caractérisé en ce que**, pour chaque feuille (100, 100') d'au moins une paire des feuilles (100, 100') du rotor, chaque secteur polaire (102 à 112) présente une asymétrie de réflexion identique par rapport à l'une quelconque de ses lignes radiales intérieures (166) ; et une feuille (100') d'au moins une paire de feuilles (100, 100') occupe une position différente par rapport à une autre feuille (100) de l'au moins une paire de feuilles (100, 100') de telle sorte qu'elle subisse une rotation autour d'un axe diamétral.

11. Rotor selon la revendication 10, le rotor (1000) étant **caractérisé en ce qu'**il comprend N paires de feuilles (100, 100'), les paires successives des feuilles (100, 100') subissant une rotation d'au plus γ/N autour de l'axe de rotation (168) du rotor (1000), γ représentant un angle sectoriel entre des barrières de flux extérieures immédiatement adjacentes (114 à 160, 114' à 160', 114" à 160") dans la même moitié d'un secteur polaire (102 à 112).

12. Procédé de fabrication de feuilles (100) d'un rotor d'une machine électrique, le procédé comprenant
la réalisation (1100) de barrières de flux extérieures (114 à 160) adjacentes à, ou au niveau d'un contour extérieur (162) d'au moins deux secteurs polaires (102 à 112) d'au moins une des feuilles (100, 100', 100", 100''') de façon à ce qu'elle présentent une asymétrie de réflexion par rapport à une ligne intérieure radiale quelconque (166) en faisant en sorte qu'une ligne médiane de l'une quelconque des barrières de flux extérieures (114 à 116) fléchisse ou s'incurve afin d'incliner les barrières de flux extérieures (114 à 160), la ligne intérieure radiale (166) s'étendant depuis un centre de la feuille ronde (100) jusqu'au contour extérieur (162) de la feuille (100), le centre étant un axe de rotation (168) du rotor, et la réalisation d'au moins deux secteurs polaires (102 à 112) de façon à ce qu'ils présentent des asymétries de réflexion différentes de telle sorte que les directions d'inclinaison (D1, D2) des barrières de flux extérieures (114 à 160) de secteurs polaires différents varient en fonction d'une coordonnée polaire du secteur polaire (102 à 112), la coordonnée polaire se rapportant à un angle que forme la ligne intérieure radiale (166) de chaque secteur polaire (102 à 112) avec une coordonnée de référence souhaitée qui peut être librement choisie ; et
la séparation, par des ponts (176), des barrières de flux extérieures (114 à 160) des barrières de flux intérieures (164), qui sont plus proches de l'axe de rotation (168) du rotor que les barrières de flux extérieures (114 à 160), de telle sorte que les barrières de flux extérieures (114 à 160) se situent entre un contour extérieur (162) de la feuille et les ponts (176) ; et
l'application de matériau de la feuille (100) autour des barrières de flux extérieures (114 à 160), les ponts (176) étant configurés pour saturer magnétiquement.

13. Procédé selon la revendication 12, **caractérisé par** la réalisation d'au moins une paire de secteurs polaires adjacents (102 à 112) de façon à ce qu'ils présentent une asymétrie de réflexion entre eux.

14. Procédé selon la revendication 12, **caractérisé par** la combinaison d'une pluralité de feuilles (100, 100', 100", 100''') selon la revendication 16 par superposition d'ouvertures axiales (180) de la pluralité de feuilles (100, 100', 100", 100''') pour réaliser le rotor (1000).
